(19) Europäisches Patentamt / European Patent Office / Office européen des brevets

(11) EP 2 879 503 B1

# (12) EUROPEAN PATENT SPECIFICATION

(45) Date of publication and mention of the grant of the patent:
**31.10.2018 Bulletin 2018/44**

(21) Application number: **13753906.0**

(22) Date of filing: **31.07.2013**

(51) Int Cl.:
*A21D 2/36* (2006.01) *A21D 8/02* (2006.01)
*A21D 10/00* (2006.01) *A21D 13/04* (2017.01)
*A23L 7/10* (2016.01) *A23L 7/109* (2016.01)
*A23L 7/117* (2016.01)

(86) International application number:
**PCT/IL2013/050654**

(87) International publication number:
**WO 2014/020607 (06.02.2014 Gazette 2014/06)**

## (54) DOUGH COMPRISING PLANT MATERIAL FROM DUCKWEEDS AND FOOD PRODUCTS PREPARED THEREFROM

TEIG MIT EINEM PFLANZENMATERIAL AUS ENTENGRÜTZE UND DARAUS HERGESTELLTE NAHRUNGSMITTELPRODUKTE

PÂTE CONTENANT UNE SUBSTANCE VÉGÉTALE ISSUE DE LA LENTILLE D'EAU ET PRODUITS ALIMENTAIRES PRÉPARÉS À PARTIR DE LADITE PÂTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2012 US 201261677558 P**

(43) Date of publication of application:
**10.06.2015 Bulletin 2015/24**

(73) Proprietor: **Hino-Man Ltd.**
**8549200 Moshav Dekel (IL)**

(72) Inventor: **ELITUV, Ehud**
**8549200 Moshav Dekel (IL)**

(74) Representative: **Lecomte & Partners**
**P.O. Box 1623**
**1016 Luxembourg (LU)**

(56) References cited:
**EP-A1- 2 036 442**
**WO-A1-2005/000028**
**US-A1- 2004 052 916**

- **Dr D WARTINBEE: "The mouth of the Kenai", , 24 October 2010 (2010-10-24), XP002715143, Retrieved from the Internet: URL:www.redoubtreporter.wordpress.com/2010/11/24/science-of-the-seasons-where-there%E2%80%99s-a-weed-nature-makes-way [retrieved on 2013-10-21] cited in the application**
- **ARMSTRONG W: "Wayne Armstrong's treatment of the Lemnaceae.", , 18 July 2012 (2012-07-18), XP002715144, Retrieved from the Internet: URL:https://web.archive.org/web/20120718230402/http://waynesword.palomar.edu/genimg2 . htm [retrieved on 2013-10-22]**
- **N.N.: "Homesteading today. Neighbourly help and friendly advice. Harvesting pond scum.", , 14 June 2011 (2011-06-14), XP002715145, Retrieved from the Internet: URL:http://www.homesteadingtoday.com/general-homesteading-forums/homesteading-questions/400434-harvesting-pond-scum.html [retrieved on 2013-10-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 879 503 B1

## Description

### TECHNOLOGICAL FIELD

The present disclosure is in the food industry field and in particular to plant comprising dough and products therefrom.

### PRIOR ART

References considered to be relevant as background to the presently disclosed subject matter are listed below:

US2004/052916

US2006/141100

WO06/111779

US2007/184160

US2010/247731

*http://redoubtreporter.wordpress.com/2010/11/24/science-of-the-seasons-where-there%E2%80%99s-a-weed-nature-makes-way/*

Voicu Gh., Constantin Gh., Stefan E.M., George Ipate G. in "Variation of farinographic parameters of doughs obtained from wheat and rye flour mixtures during kneading "U.P.B. Sci. Bull., Series D, Vol. 74, Iss. 2, 2012

http://waynesword.palomar.edu/genimg2.htm

https://www.homesteadingtoday.com/threads/harvesting-pond-scum.400434/

### BACKGROUND

Increasing attention is given to improving properties of foodstuff, such as taste, aroma, coloration, nutrient quality, long shelf-life and aesthetic appearance. This includes improving or changing properties of foodstuff containing wheat dough, the latter traditionally used as a basic food ingredient, or play a major role, in many kinds of baked food stuffs.

There is also a growing awareness to the importance of vegetables and other nutritional valuable plants due to their high content of health-beneficial ingredients, such as various vitamins, minerals, fibers, antioxidants, phytosterols, carotenes, proteins etc. Thus, one way to improve foodstuff employs the incorporation of plants in the food. This includes enriching dough with nutritional valuable material.

The art provides various examples of enrichment of dough and bakery products with plant derived ingredients. For example, US Patent Application Publication No. 2004/052916 (International Patent Application Publication No. WO 2004/023880) describes the utilization of powdered vegetables, concentrated liquid vegetables, powdered grains, and dehydrated diced vegetables, in yeast and non-yeast, dough-based products, such as bread.

US Patent Application Publication No. 2006/141100 describes bread products used for the production of bread and other dough-based foodstuff. The bread product contains a volume originating from vegetable in the form of vegetable powder, vegetable juice, purees or used as a natural colorant.

International Patent Application Publication No. WO06/111779 describes bakery products comprising 0.5-40% by weight vegetable flakes in addition to usual bakery ingredients.

US Patent Application Publication No. 2007/184160 (International Patent Application Publication No. WO2005/076741) describes vegetable-based dough that comprises softened gluten and added vegetable material, the latter comprising legumes and/or fruits and/or fibers.

In addition, US Patent Application Publication No. 2010/247731 (International Patent Application Publication No. WO2009/037086) describes fresh pasta comprising, in addition to usual ingredients, such as flour, water, eggs, up to 50% of one or more fresh vegetables by weight of the dough. The process for the preparation of fresh pasta comprises mixing and kneading the flour with eggs and/or water and forming sheets of dough in order to obtain fresh pasta having the desired shape and increased fiber content. Certain vegetables like tomato, carrot, spinach or red beet are also used for their coloring effect.

In addition, the use of *Wolffia* (commonly called "water meal"), the smallest flowering plants in the world, and a member of the family Lemnaceae ("duckweeds") was described as being mixed with flour for baking breads and muffins [Dr. D. Wartinbee for the Redoubt Reporter (2010) "Science of the Seasons: Where there's a weed, nature makes way" http://redoubtreporter.wordpress.com/2010/11/24/science-of-the-seasons-where-there%E2%80%99s-a-weed-nature-makes-way/].

## GENERAL DESCRIPTION

In accordance with a first aspect, the present disclosure provides a dough according to claim 1.

The present disclosure provides a food product comprising the dough as disclosed herein. According to some embodiments, the dough is combined with at least one additional food ingredient.

In accordance with another aspect, the present disclosure provides a method of preparing a dough, according to claim 6.

## BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:

**Figure 1** shows a *Brabender Farinograph* profile of a prior art exemplary dough and farinographic parameters of the dough (Voicu Gh., et al U.P.B. Sci. Bull., Series D, Vol. 74, Iss. 2, 2012).

**Figures 2A to 2D** show characterization of dough without *Wolffia* plant **(Figures 2A and 2B)** and with *Wolffia* plant **(Figures 2C and 2D),** including the respective farinograph profiles **(Figures 2A and 2C)** and photographic images **(Figures 2B and 2D),** the arrow indicating an intermediate peak.

**Figures 3A to 3C** are farinographic profiles of dough obtained without *Wolffia* plant **(Figure 3A)** or with *Wolffia* plant **(Figures 3B and 3C)** according to another embodiment, the arrow indicating an intermediate peak.

**Figure 4** is a graph showing the percent rising degree in time of dough (RD%) prepared with *Wolffia* plant (Dough#8 and Dough#9) or without *Wolffia* plant (Dough#7) and in the presence of yeast, with the water content being 57.6%.

**Figure 5** is a graph showing the percent rising degree in time of dough (RD%) with *Wolffia* plant (Dough#11 and Dough#12) or without *Wolffia* plant (Dough#10), with the water content being 70%.

## DETAILED DESCRIPTION OF EMBODIMENTS

The present disclosure is based on the development of a process for combining aquatic plants, which are rich in liquid, with flour, to form various types of dough suitable for the production of dough-based food products. The inventors have found that liquid from the aquatic plants may replace or subtracted from water usually required in the preparation of dough. In fact, the inventors have shown that dough can be prepared even without adding any external water, i.e. relying essentially only on liquid extracted from the aquatic plant.

The inventors have thus suggested that the water from the *Wolffia* plant may serve as a major water source replacing external water, while providing the dough with beneficial nutritional facts of the plant from within the plant's liquid. Without being bound by theory, it was suggested that when using fresh whole plant, the liquid is extracted from the plant during the dough kneading process (which apply shear forces on the plant cells) which are then absorbed by the flour to thereby form the dough.

As such, in accordance with its first aspect, the present disclosure provides a dough comprising flour and particulate plant material, the dough being characterized by a malleable mass with said particulate plant material being distributed therein, the plant being a member of the *Duckweeds* family having its plant color range, said mass having a mass color falling within or being near said plant color range.

The term *"dough"* should be understood as having its commonly used meaning, namely, a composition comprising as minimal essential ingredients flour and a source of liquid, for example at least water that is subjected to kneading and shaping. The dough is characterized by its malleability.

The term "*malleable*" should be understood as defining the capacity of the dough for adaptive changes without necessary being easily broken and as such its pliability, elasticity and/or flexibility which thereby allows the subjecting of the dough to any one of the following processing steps: stretching, shaping, extending, sheeting, morphing, fitting, kneading, molding, modeling, or the like. The shaping of the dough may be by any instrument having predetermined shapes or by a rolling pin or by hand.

In accordance with the context of the present disclosure, it should be understood that when referring to malleable dough, it is to be distinguished from a flour and liquid blend, such as those used for preparing muffins that is a fluid in nature and as such cannot be shaped without the use of a supporting mold. In other words, malleable dough is not a flowing or pourable blend.

As appreciated, flour has no malleable or elastic characteristic, however, upon mixing with a liquid such as water, hydration of wheat proteins occurs and dough is produced. Formation of dough may be considered as formation of a skeleton providing the structure and malleability of the dough. As such, the term "*malleable mass*" in the context of the present invention denotes a pliable thick mixture of flour and liquid with the flour being preferably hydrated with the liquid to form dough mass.

Without being bound by theory, gluten is formed during the process of dough preparation. Gluten comprises proteins termed Glutenin and Gliadin, which are believed to provide most of the elastic and malleable properties of the dough. Further, without being bound by theory, Gluten is believed to be responsible for the rheological properties of dough.

In addition to flour, the dough according to the present disclosure comprises particulate plant material. The term *"particulate plant material*" refers to *Duckweeds* plant material, at least part of which includes pieces of duckweeds plant. In this connection, it is to be understood that the *Duckweeds* plant material in the dough may be in the form of a whole plant, i.e. essentially intact plant; or pieces of the plant or a powder of the whole plant (e.g. including at least the plant sieves and fibers, proteins, polysaccharides etc).

The term "*whole*" or "*essentially intact*" plant is to be understood to encompass a plant with its original whole cellular skeletal structure, namely, whole cells without applying any crushing, grinding, powdering etc., of the plant or of at least the plant's fronds; while the term "*plant part*" or "*particulate plant materia*l" or "*pieces of plant*" is to be understood as referring to a plant after being subjected to at least one processing step that resulted in the disruption of the cellular structure of the plant, for instance, grinding, crushing or subjecting the plant to shear forces, as well subjecting to extraction processes. In some embodiments, the particular plant material encompasses one or more of whole plant cells, fractionated cells and combination of same.

In some other embodiments, the particulate plant material encompasses "*juice plant*". The term "*juice plant*" is to be understood to encompass a colored (e.g. green) water suspension with a solid content from the plant cells of 1-15%, preferably with a solid content of 2-10%, and more preferably with a solid content of 3-8%, resulted by plant cell disruption process, with and/or without a concentration step, using methods and equipment known in the art.

In some further embodiments, the particulate plant material is obtained from fresh, partially dried plant material or essentially fully dried plant material. The particulate material may be whole plant material or processed plant material, e.g. where the cells structure was disrupted.

The particulate plant material in the dough may be defined by its dimensions, e.g. by an average diameter. In some embodiments, the particulate plant material is defined by the dimensions of the whole plant, e.g. one having an average diameter of up to 12mm, at times between 0.02 to 12mm, further at times, between 0.03 to 2mm, or by an average diameter of between 0.5 to 1.5mm or 0.6 to 1mm. When the particulate plant material is in powdered form, the dimensions thereof would typically be in the range of 20-100microns, at times, 30-80microns, 40-60microns (particle diameter range).

Being an average diameter, it is appreciated that in dough, there is a distribution of dimensions within any of the above exemplary ranges. The particulate size can be measured by any method known in the art. Non-limiting examples include optical microscopy.

The plant material may also be characterized by their phenotypic features. Duckweeds are the smallest aquatic flowering plants, being almost all leaves with essentially no stem tissue and only one, few or no roots and are considered high pigment-containing monocotyledonous plants. As such, the plant material may be characterized by its color range. Various members of the Duckweeds family have different colors or color ranges. When referring to a color or color range it is to be understood as encompassing also variations within the color in its hue, chroma, saturation, intensity, lightness, value, tone or brightness, tints or shades (e.g. being mixed with white or black hue).

Thus, when referring in the context of the present disclosure to a plant color range and to a mass having a mass color falling within the plant color range or near the plant color range it is to be understood that when employing, for the preparation of the dough, a duckweeds with a particular pigment range, the dough mass will obtain the same or spectrally near color.

According to the invention, the plant is *Wolffia arrhiza* which has a green or near green pigment, as a result of the chlorophyll present in the plant. Without being bound by theory, the changes in the color of dough which contains the plant may be due to the formation of a chlorophyll-complex (e.g. non-covalent bonding) with biopolymers such as polysaccharides and proteins.

In this context, and without being limited thereto, the term "*green color*" denotes a color or color range between yellow and blue in the visible light spectrum, having a wavelength or range of wavelengths falling between about 495nm to 570nm with the "*near green*" being defined as any deviation from the green color of about 20nm to about 100nm.

In the context of the present disclosure, the color of the mass in the dough is optically significant difference from the color of dough prepared with the same type and same amount of flour combined with an amount of water to from the dough. When referring to optically significant difference it is to be understood as encompassing a difference that is identified and determined even by a human visual inspection so as to enable the verification that the dough does not include liquid, solid or soluble components (e.g. proteins, saccharides/oligosaccharides, fats, vitamins, sieves and fibers etc.) and/or pigments originating from the plant.

In some embodiments, the color of the dough mass is provided from the plant pigment and/or plant components. In some embodiments, the color of the dough mass is provided from the plant liquid or components carrying the pigment during hydration of the dough by the liquid of the plant. According to this embodiment, it is to be appreciated that the dough comprises other plant components carried, *inter alia*, by the plant liquid. Such plant components may include, without being limited thereto, plant proteins (4-8g/kg) and protein complexes such as the ferritin/iron complex (6-12mg/kg), saccharides and oligosaccharides, fats, vitamin A (0.9-1.1UI/kg), vitamin B1(0.3-0.5mg/kg), vitamin B3 (1.2-1.4mg/kg). The use of the plant components in the dough mass enriches the dough mass nutritionally.

In some embodiments, the majority of the liquid components of the plant are present in the dough mass (due to hydration of the flour by the plant liquid or due to combining the dried powdered plant including essentially all the components of the whole plant).

The plant material in the dough may be provided in any level of water content, namely, it may be included as a fresh plant material, partially dried plant material, essentially dried plant material or combinations of same.

In some other embodiments, the plant material comprises fresh plant with water content equal or essentially equal to the content of the water in the whole plant without subjecting the plant to any processing that may affect the internal liquid content of the plant. The fresh plant may be as obtained from the growing farm or its natural habitat and at most being subjected to washing.

As noted above, the plant material may comprise partially dried plant material, namely, plant from which at least 10% (by weight) liquid has been dehydrated or extracted otherwise. In some embodiments, a partially dried plant is to be understood as referring to a plant or plant part from which between 10% to 80% (by weight), at times, between 30% to 60%(by weight) water has been discharged.

In some other embodiments, the plant material comprises essentially dried plant material, namely, a plant or plant part from which only 20% (by weight) of the original liquid of the plant is retained in the plant, i.e. up to 80% of the original plant liquid has been extracted or otherwise removed from the plant. In some embodiments, an essentially dried plant is one in which less than 10%, at times equal or less than 5% or even less than 2% of the original liquid content is retained in the plant. At times, the dried plant material comprises between 0% to 5% residual liquid.

In some other embodiments, the color of the dough mass is provided from the plant material comprising a partially or essentially dried material. It should be understood that the dough mass may be colored by the plant pigments even if using flour with a partially or essentially dried material and external water or other liquid.

Liquid content in the plant may be reduced by any conventional and/or industrially acceptable techniques, including, without being limited thereto, drying in the sun, rehydrating in a heating device such as an oven, freeze-drying, spray drying, fluidized bed, vacuum drying, capillary extraction or combination thereof. For example as shown in the non-limiting Example 5, dry powdered plant material was obtained by drying whole fresh plant at 38°C using a drier for vegetables (*Ezidri*) for about 22 hours to form a granular dried mass which was then milled with *IKA MF10* grinder and sieved with *Vibratory Sieve shaker* (FISCHER) at the maximum size of 40 microns. Powdered plant is thus to be understood as having the dimensions within the range of 20-100microns, at times, 30-80microns, 40-60microns.

Duckweeds are characterized by a high liquid content as compared to its solid content. The liquid content and the solid content in a plant may be measured by any known method in the field, for example by weighting the whole fresh plant and after fully drying the material to obtain the dry solid content, subtracting the weight of the latter to obtain the original liquid content.

In some embodiments, the liquid/water content in duckweeds is characterized by a ratio of 95% to 5% (the lower range referring typically to water content in essentially dried plant material). In some other embodiments, the liquid content in the plant is between about 90% to about 10%, at times, between 80% to 20%.

The particulate plant material is distributed within the dough. In some embodiments, the particulate material is embedded in the dough, being spaced apart from each other/spread/scattered through the dough mass. In some embodiments, the particulate matter is essentially uniformly spaced apart in the dough mass. The particulate material is typically randomly distributed in the dough mass.

The dough may be defined by the ratio of flour to dry plant material. According to the invention, the ratio between the flour and the dry plant material in the dough mass is between 95:5 and 97:3.

To form the dough, the flour requires kneading with a liquid component. In the context of the present disclosure the liquid component may be any liquid selected from the group consisting of water, liquid from the plant, and combinations of same.

In one embodiment, the liquid is entirely provided from the plant material, e.g. kneading flour with whole plant to use the liquid originating from the plant.

In some other embodiments, a portion of external water is added to the flour and plant material. To this end, it may be required to use partially dried plant in order to compensate (subtract) the addition of external water.

In some other embodiments, the plant material in the dough is in dry form or essentially a dry form and essentially the entire required volume of liquid is added externally.

The preparation of the dough with the plant material requires a defined ratio between the liquid in the dough and the total dry material in the dough. In this context, the term "*total dry material*" encompasses the amount of flour and the amount of plant material when measured in dry form. The amount of dry plant material may be determined as described above for determining liquid content within the plant.

One may use a weight % ratio between the liquid and total dry material. In some embodiments, the liquid to total dry material in the dough may be between 55% to 85%, at times, between 60% to 80%, and even between 65% to 75%.

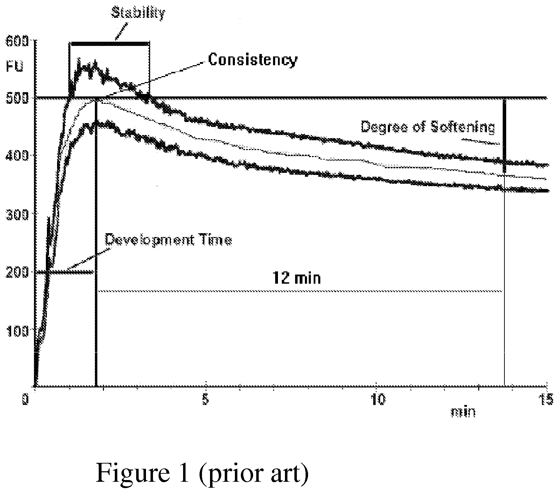

The dough may be further characterized by its farinographic characteristics (also regarded as the dough's rheological parameters). A farinograph is a common physical dough-testing instrument used to determine different characterizations of dough, such as the plasticity and mobility of the dough. The farinograph defines a dough farinographic profile with the vertical axis being in farinograph units (FU) (at times also in Brabender Units (BU)) as a function of time in minutes. **Figure 1** provides a farinographic profile of an exemplary conventional dough (flour and water) that is defined by various farinographic parameters. These parameters are used also to define the dough in the context of the present disclosure, and include, without being limited thereto, the dough arrival time, the dough development time, the dough stability, the dough mixing tolerance index (MTI), the dough degree of softening, absorption and the farinograph profiling *per se*.

In the context used herein,

- "*arrival time*" denotes the time required for the peak of the farinograph curve to reach the 500 farinograph units (FU) line after initializing mixing/kneading between the flour and liquid or liquid source. The *arrival time* is a measurement of the rate at which the liquid, e.g. water is taken up by the flour. Generally, for a given variety of wheat, the arrival time increases as the protein content increases.
- "*development time* " also known as "*peak*" or "*peak time*" denotes the time from the first addition of the liquid or liquid source to the development of the dough's maximum consistency, or minimum mobility.
- "*departure time*" denotes the time from the addition of the liquid or liquid source to the time at which the curve leaves the 500FU line. Long departure time indicates flour with good tolerance to mixing or kneading.
- *"stability"* or "*dough stability*" denotes the difference in time, to the nearest half-minute, between the time when the curve first intercepts the 500FU line (*arrival time*) and the time when the curve leaves the 500FU line (*departure time*). It is generally accepted that longer stability of flour, the more tolerance is to mixing.
- "*mixing tolerance index (MTI)* " is the difference in BU value (or FU value) at the top of the curve at peak time and the value at the top of the curve 5 minutes after the peak. *MTI* generally indicates the degree of softening during mixing.
- "*absorption*" denotes the amount of water required to center the farinograph curve (profile) on the 500-Brabender unit (BU) or 500FU line. *Absorption* generally relates to the amount of water needed for a flour to be optimally processed into end product.

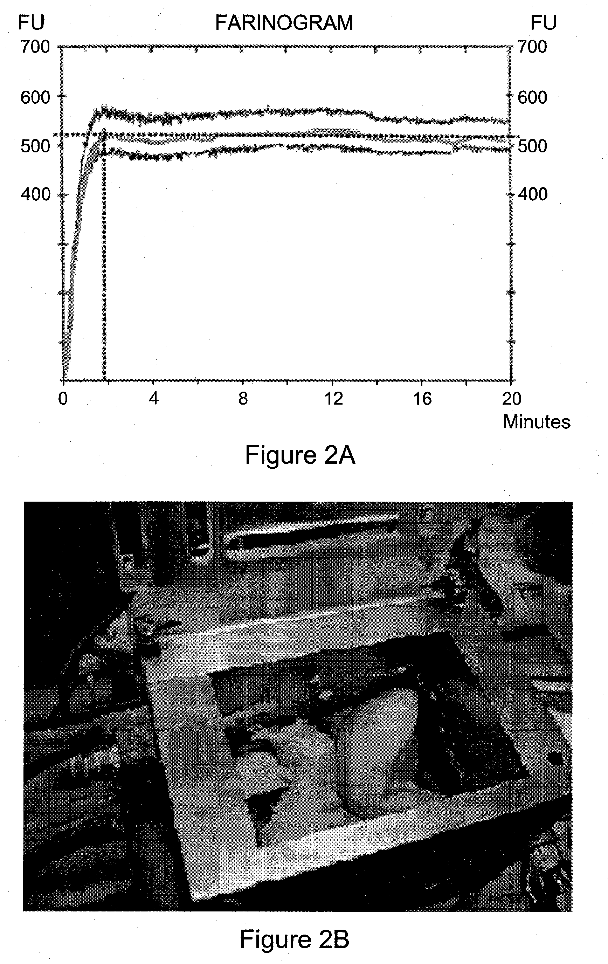

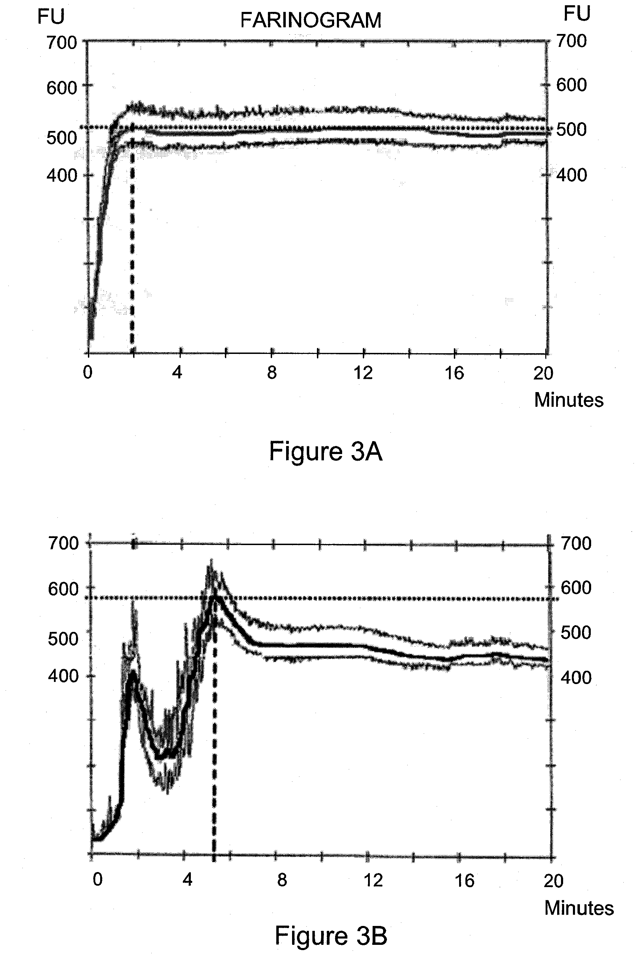

In some embodiments, the dough of the present disclosure has a characteristic farinographic profile with an intermediate peak before reaching its development time, as shown in the non-limiting examples of **Figures 2B** and **3B** (marked by arrows).

As a non-limiting example, reference is made to Example 1 showing the development time (DT) of the dough (*Wolffia* and wheat flour) was 2.73 times higher than the DT for the dough obtained without the plant (wheat flour and corresponding amount of water). Without being bound by theory, it was suggested by the inventors that the increase in the DT observed in the dough with the plant material is associated with the time required for the plant liquid from the plant to be released from the plant structure (due to disruption) and to be absorbed by the flour and interact with biopolymeric components of the flour.

The dough may be further characterized by its rising level, e.g. when compared to the level of rising without the plant material. In some embodiments, the dough may be characterized by rising at a predetermined time point, (e.g. 10 minutes after mixing the minimal essential components) to a level that is from about 8% to about 400% greater than the rise of the dough at said predetermined time point in the absence of said plant material, e.g. only flour and liquid/water. In some other embodiments, rising at said predetermined time point is to a level that is between 10% and 50% greater than the rising of the dough in the absence of said plant.

The flour in the dough is wheat flour.

In addition to flour and the plant material, the dough may also include other food ingredients, such as those typically added to dough.

According to the invention, the dough comprises a leavening agent (also known as "*leaveners*") in the form of yeast. In some embodiments, the yeast can be fresh yeast, active dry yeast, and instant yeast.

The amount of leavening agent may be as commonly used. At times, the amount will be between 0.5%-5% with respect to the amount of flour.

Notably, at times, the plant material, irrespective of its manner of use, is considered as a leavening agent, as it contributed to the rising of the dough as compared to dough prepared without the plant material.

The dough may be combined with other food ingredients. Non limiting examples include flavoring agents, vegetable or vegetable part, oil, vitamins, grains, olives, oil.

In accordance with a further aspect, provided herein is a method of preparing the dough disclosed herein, namely, a dough comprising flour and plant material as defined above. The method comprises kneading flour with the plant material being Wolffia arrhiza, the kneading being performed under conditions sufficient to obtain a malleable mass with particulate plant material distributed in the dough mass, and having a mass color falling within or being near the plant color range.

In some embodiments, the process comprises kneading an amount of flour with plant material being any one or combination of whole plant material, fractionated plant material, fresh plant material, partially or essentially fully dried plant material.

Irrespective of whether fresh plant material, partially dried plant material or fully dried plant material is used, the ratio between flour added to the kneading step and the dry plant material and the ratio between liquid to total dry material is as defined hereinabove.

In some embodiments, fresh whole plant is combined with flour at times without addition of external water. Without being bound by theory, it is believed by the inventors that the kneading of whole fresh plant with flour causes disruption of plant skeletal structure to thereby release liquid from within the plant cells and hydrate the flour (to form a *vegetal gel*) with said released liquid. This causes, *inter alia*, the essentially homogenous coloring of the dough mass with the color of the plant. As such, the level of flour hydration by the plant liquid and the quality of the dough may depend on level of plant disruption.

In some other embodiments, a minor amount of external water may be added. When referring to minor amount it is to be understood as no more than 20% of the total amount of liquid required in order to form the dough.

The conditions of preparing the dough from flour and plant material as defined herein, include, without being limited thereto, kneading time, kneader torque moment, kneading velocity, dough temperature and tip speed. These conditions may change between types of flours and are determined the flour farinographic profile.

In some embodiments, kneading is for a time interval between the thus obtained dough reaches its arrival time and the dough's departure time as determined by a farinograph profile of said dough.

In some embodiments, the kneading may include continuous kneading or pulsed kneading, the later including intermediate cessations in kneading. The pulsed kneading may assist in disruption (breaking) of the plant material so as to more efficiently release the plant liquid to the flour.

The time of kneading will depend, *inter alia*, on the type of flour used and the flour to plant material ratio. The kneading will be performed at least for the arrival time and not more than the departure time. In some embodiments, kneading will be for a time from initial combination of the components of between 3 to 30min, at times, between 4 to 20min and further at times, between 5 to 10min.

In some embodiments, the temperature of the dough during kneading is controlled to be maintained at a temperature range of between 25°C-30°C.

In some embodiments, the kneading velocity is between 10rpm-150rpm, at times, between 15rpm-100rpm, and further at times, between 30-60rpm.

In some embodiments, the method may also comprise allowing the dough to rise. The dough includes a leavening agent as discussed above. Rising period may depend on the amount of plant used and in some embodiments may be allowed for a period of 1 to 3 hours after the dough is obtained (i.e. after cessation of kneading). Rising may be performed at temperatures in the range of 25°C-35°C. As noted above, rising may be to a level of between 8% to even 400% more than the rising of the dough in the absence the plant material (e.g. with water used instead of plant liquid).

The resulting dough is exhibited as a colored textured mass that is similar or only slightly different (e.g. within the same hue range) to that of the particulates distributed in the mass. This two-color appearance may be regarded as a "bi-phasic" type mass. This is exemplified in **Figures 2B** (without plant) **and 2D** (with plant).

In the context of the present invention when referring to dough it should be understood to encompass dough at any stage of the preparation.

The dough according to the present application may be used immediately after its initial preparation (e.g. while still in stable range, e.g. between the arrival time and departure time), after rising, or after storage conditions. In some embodiments, the dough may be maintained in a cooled or frozen state (for storage).

In some embodiments, the dough is taken for further processing into a final food product or stored before reaching the departure time.

Either as freshly made dough or after storage, the dough is used for the preparation of food products.

Thus, in non-claimed embodiments, the present disclosure provides a food product comprising the dough disclosed herein and a method of preparing a food product making use of the dough.

Due to the use of the dough disclosed herein, the food product comprises a texture having a pigment/color similar to that of the dough and components of the liquid of the plant. In some other embodiments, the food product comprising distributed therein particulate plant material.

The food product according to the present disclosure may be in different forms. In some embodiments, the food product is partially or fully prepared, including partially or fully cooked, partially or fully baked, partially or fully stewed, partially or fully boiled, partially or fully broiled, partially or fully fried and combination of same. When referring to partial preparation of a food product it is to be understood as referring to a product that required further handling before eating, i.e. an intermediate product. For example, the partial food product may be a partially baked break that required further baking by the consumer.

When referring to a food product, it is to be understood as encompassing any dough based product, including, without being limited thereto, various bakery products, such as bread, rolls, pita bread, cookies, pizza, snack bar, pasta, noodles, chips, cereal.

The food product is prepared by providing the dough disclosed herein and processing the dough by at least one process step selected from the group consisting of combining the dough with a food ingredient, allowing the dough to rise, kneading, extruding, molding, shaping, cooking, stewing, boiling, broiling, baking, frying and any combination of same. All these processing steps may be performed by techniques known to those versed in the food industry.

The dough disclosed herein and its method of preparation and use is particularly suitable for the food industry. Without being bound by theory, it is believed that by using the nutritional rich (e.g. fiber-rich, protein rich, and ferritin rich) aquatic plant, of the Duckweeds family, allows the industrial manufacturing of nutritional rich dough based products. The fact that the aquatic plant used in the context of the present disclosure is rich in fiber, allows the formation of stable dough, irrespective of whether the plant is used in fresh or dry form.

In a preferred embodiment, the dough and food products obtained there from make use of whole fresh aquatic plant (or at most only partially dried) which allows, during the kneading process to utilize the liquid component of the plant with its nutritional components to be incorporated into the dough mass.

## SOME NON-LIMITING EXAMPLES

### METHODS:

#### *Farinograph Test*

Farinograph tests were used to determine the physical and farinographic/rheological properties of dough and the quality of the dough as well as the final viscosity and texture of the dough product. Farinograph tests were conducted with the use of a Brabender Farinograph (ICC no.115/1; ISO 5530-1) equipped with a mixing bowl with a capacity of 300g of flour (450-500 g dough) and a recirculation bath adjusted to 30±1°C. The Farinograph experiment was conducted in accordance with AACC 54-21 method for Farinograph experiments, and in accordance with the AACC 54-50 method for determining the flour absorption capacity.

The dough was subjected to kneading at a mixing velocity of 60 rpm for duration of 20 minutes, during which the Farinograph curve was recorded with the use of PC software. The kneading and rheological parameters of each dough were separately derived from the Farinograph curve/profile.

An example of a Farinograph curve of a conventional (flour/water based) dough is displayed in **Figure 1** (Voicu Gh., et al U.P.B. Sci. Bull., Series D, Vol. 74, Iss. 2, 2012). The corresponding rheological parameters of dough derived from this curve were; **DT-**Development Time which expresses the duration of dough formation in minutes, **C**-Consistency of dough expressed in Farinograph Units (FU), **S**-Stability time expressed in minutes and **DS**-Degree of Softening determined 12 min from the maximum peak in the curve (viscosity) (ICC no. 115/1) expressed in Farinograph Units (FU) (*Voicu Gh*., *2012, ibid.*)

#### *Rising Test*

The evolution of the dough's volume by measuring the height during the process of fermentation was accomplished as follows: A sample of each dough as detailed below was prepared in a Kitchen Aid kitchen mixer and immediately weighed after their preparation in three suitable bowls of 150 ml volume each.

The freshly prepared dough was pressed for filling the empty-surface of the bowls, and the corresponding height of the surface of each dough was immediately marked as a base line in each bowl. Then, the dough samples were covered with a plastic wrap and were allowed to rise at room temperature (25°C) for 50 minutes.

Photographical images of the samples were taken with the onset of the experiment with the values, $t_0$ and $H_0$, corresponding to the time of the onset of the experiment and the initial height (as an average of samples used in the same experiment) respectively. Additional images were taken consecutively every 5 minutes. The average height of the samples at time, $t_i$, is represented by $H_t$.

The difference in the dough level ($H_t$) rising from within the bowl at time, $t_r$, as compared to the initial level (height) of the dough, $H_0$, was expressed as the *Rising Degree*, *RD*, and is given by:

$$RD = \frac{H_t}{H_0} x100\%$$

**RESULTS:**

**Example 1-***Preparation of Wolffia Arrhiza containing dough:*

Dough was prepared with and without *Wolffia Arrhiza* as a whole fresh plant, with the ingredients as specified in **Table 1.**

**Table 1: Dough ingredients**

| | Dough #1 | Dough #2 |
|---|---|---|
| Total mass [g] | 474 | 474 |
| Flour1) mass [g] | 300 | 290.8 |
| Water2)mass [g] | 174 | 0 |
| *Wolffia* Plant mass [g] | 0 | 183.2 |
| Plant Solid [g] | - | 9.2 |
| Plant Water [g] | - | 174 |
| 1) Wheat flour, white, all-purpose "WF-0513" from CEREAL MILL OF ISRAEL, Bnei Brak, with the following chemical composition: ash = 0.5; protein = 10.9%; moisture=12.2%; calcium = 14.2 mg/100 g; iron = 4.3mg/100 g<br>2) Whole fresh plant Wolffia Arrhiza, from HINOMAN with the chemical composition: ash = 0.64%; protein = 1.98 percent; moisture = 95%; calcium = 27.8 mg/100 g; iron=7.8 mg/100 g | | |

For the preparation of dough, the ingredients were introduced into a Farinograph kneader's mixing bowl and were allowed to mix.

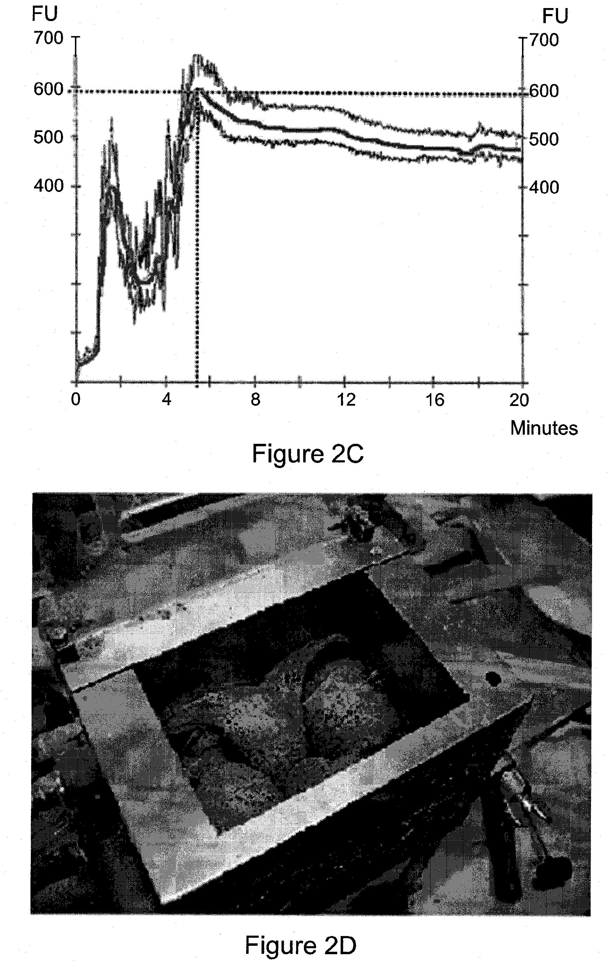

The Farinograph curves corresponding to the dough formulations (Dough#1 and Dough#2), are shown in **Figure 2,** and the corresponding rheological parameters obtained from the curves are provided in **Table 2.**

**Table 2: Rheological parameters obtained from Farinograph curves**

| | Dough#1 | Dough#2 |
|---|---|---|
| DT (min) | 1.9 | 5.2 |
| C (FU) | 514 | 598 |
| S (min) | 19 | 2 |
| DS (FU) | 3 | 88 |

The dough with whole fresh *Wolffia* (Dough #2), having flour to plant ratio (by dry weight basis) of 97:3, and with an amount of water used for preparation of 174g had a value for development time (DT) of 5.2 minutes. This value is 2.73 times higher than the development time for the dough formulation without the plant.

Without being bound by theory, it was suggested that the increase in the DT observed in the dough with the plant correlate with the increase in time required for the water from the plant to be used in the dough preparation process.

The stability of dough formulation with the plant was 2 minutes which is significantly lower than the stability of the dough formulation without the plant of 19 minutes.

In addition, the degree of softening for the dough preparation with the plant was much higher at 88 FU compared to 3 FU obtained for a dough preparation without the plant.

Overall the differences in the rheological parameters suggest that addition of *Wolffia* and the use of the water in the plant led to differences in the profile of the dough.

Visual inspection of the dough formation with the plant showed a light green color, different from the dough without plant **(Figures 2B and 2D)** and a bi-phase type morphology/texture of two green hues, light green mass and dark greenish particulates.

As can be seen in **Figure 2D,** the dough containing *Wolffia* was characterized by appearance of intense green color dots distributed in the green light phase, namely large coverage of the dough mass of green color. Without being bound by theory, the changes in the color of dough which contains the plant is explained by a chlorophyll - protein complex formed by the content in the aqueous solution that is extracted from the whole fresh *Wolffia*, with the dye properties, that is capable to interact with biopolymers from flour (polysaccharides and proteins), with preferential formation of non-covalent bonds.

Optical microscope evaluation of the size of intense green dots has shown that they represent the plant material (the average diameter of 0.6 mm) smaller than the one suitable for whole fresh *Wolffia* (the plant has an average diameter of 1 mm).

Without being bound by theory, it was suggested that there is a partial cell disruption process of the vegetal biomass during dough preparation taking place simultaneously with the absorption of liquid phase from "vegetal gels" through a sorbent in the mixture, represented by flour, followed by the contraction of plant's individual volume.

## Example 2

In this example, the influence of water content in the formulations of the dough, with and without the plant was evaluated. The formulations used in this example are presented in **Table 3.**

**Table 3: Ingredients for dough samples**

| | Dough#3 | Dough#4 | Dough#5 | Dough#6 |
|---|---|---|---|---|
| Total mass [g] | 474 | 474 | 474 | 474 |
| Flour mass [g] | 304 | 295 | 296 | 286.6 |
| Water mass [g] | 170 | 0 | 178 | 0 |
| *Wolffia* Plant mass [g] | 0 | 179 | 0 | 187.4 |
| Plant Solid [g] | - | 9 | - | 9.4 |
| Plant Water [g] | - | 170 | - | 178 |

Rheological parameters adequate to dough samples preparation are shown in **Table 4.**

**Table 4: Rheological parameters obtained from Farinograph curves**

| | Dough#3 | Dough#4 | Dough#5 | Dough#6 |
|---|---|---|---|---|
| DT (min) | 2.1 | 5.8 | 1.7 | 5.1 |
| C (FU) | 623 | 631 | 501 | 582 |
| S (min) | 14 | 2.2 | 18.3 | 1.5 |
| DS (FU) | 36 | 114 | 0 | 106 |

As can be seen in **Table 4,** changing the water to flour ratio in the dough formulations without the plant, from 56% (170:304, water to flour ratio in Dough#3) to 60% (178:296, water to flour ratio in Dough#5) reduced the consistency value of more than 120 FU.

By replacing an amount of flour with the corresponding amount of whole fresh *Wolffia,* so that the plant provides the source of water in the same amount as in the dough formulations without plants, an effect of "firmness" of the dough material was observed as indicated by the changes in the consistency values.

At a water content of 56%-57%, the firming (hardening) effect induced by the plant was indicated by an increase of 1.2% in the value of the consistency as observed between Dough#3 and Dough#4 both having the same amount of water, albeit that the source of the water in Dough#4 came from the plant.

Also comparison of dough having 60% -62% water in Dough#5 and Dough#6 (without and with the plant), showed an increase 16.1% in the consistency value in the dough with the plant suggesting a hardening (firming) effect in the dough having the plant as a source of water.

Changes in additional parameters were observed when comparing dough having water from the plant, all these taken together suggest that the plant can be used as a water source to replace external water.

The experimental data of consistency showed that the whole fresh plant can be used for the preparation of dough for food-products, without the need external water as in regular dough. As such, when using whole fresh plant, the source of water can come from the plant itself.

Without being bound by theory, it was suggested that the water released by the plant interacts with biopolymeric components of the flour, enabling an easier mixing ability, as the viscosity of initial mixture is lower.

## Example 3

In this example, the influence of the intensity of cell disruption process on the formation of the dough was evaluated.

An additional dough sample denoted Dough#6A was prepared having similar ingredients as sample Dough#6 (**Table 3**). After adding the ingredients into the Farinograph's mixing bowl, the ingredients were mixed for about 1 minute until homogenization of the two solid phases (ingredients) was achieved. Then, the mixture was removed from the device, and placed in a metallic tray, where it was covered with a plastic wrap and finally introduced into a laboratory incubator with the temperature adjusted to about 30°C. The mixture was allowed to rest for about 60 minutes inside the incubator and then was introduced into the Farinograph.

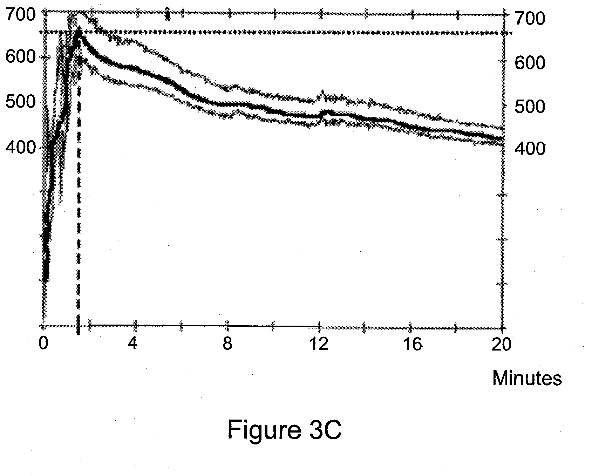

The rheological properties of the Dough#6A were compared to those of Dough#5 and Dough #6 samples and are presented in **Figure 3.**

The Farinograph curve of Dough #6A was found to be typically different than that of Dough #6 having the same ingredients (**Figures 3B and 3C**). **Figure 3C** shows that the mixture had characteristics of dough after 1.5 minutes of mixing, with a consistency value of 663 FU, a value which was found to be higher than that of Dough#5 or Dough#6.

Without being bound by theory it was suggested as follows in the absence of mechanical efforts the flour functions as an absorbent to vegetal gel particles belonging to the whole fresh *Wolffia,* extracting one part from liquid medium content in plant. By absorbing the liquid medium, the particles of flour swell, resulting in the formation of a gel which is more or less continuous and consists of a reactive biopolymeric network connected via non-covalent bonds.

A reactive-three dimensional biopolymeric network of flour wraps the plant particles without breaking the cell walls occur and interact with the particels, resulting a macromolecular composite that can be associated with semi-Interpenetrating Polymer Network (IPN). Because the volume of extracted liquid medium from the plant is insufficient for a properly solvation of gluten the resulted mixture of dough is hard.

At the intervention of tangential tensions exerted by sigma mixer of farinograph, semi-IPN configuration is degraded gradually, continually, with releasing of an additional quantity of liquid medium of the plant, due to the processes of cell disruption event

Thus, in summary it was shown that when the intensity of cell disruption decreases the amount of water available from the plant is reduced the water are insufficient and as such the dough mixture is hard.

## Example 4

In this example, the effect of partial replacement of flour with *Wolffia Arrhiza* as whole fresh plant on the fermentation (rising) of dough containing yeast was tested. The ingredients and the conditions used to prepare the dough are presented in **Table 5.**

**Table 5: Formulation and processing conditions**

| Components | Dough#7 | Dough#8 | Dough#9 |
|---|---|---|---|
| Flour mass [g] | 500 | 483 | 483 |
| Water mass [g] | 288 | 0 | 0 |
| *Wolffia* Plant mass [g] | 0 | 305 | 305 |
| Plant Solid [g] | | 17 | 17 |
| Plant Water [g] | | 288 | 288 |

(continued)

| Components | Dough#7 | Dough#8 | Dough#9 |
|---|---|---|---|
| Yeast (dry) [g] | 8 | 8 | 8 |
| Salt [g] | 7.5 | 7.5 | 7.5 |
| **Processing** | | | |
| Equipment | Kitchen Aid-KSM 900, USA | | |
| Mixing speed [rpm] | 60 | 60 | 60 |
| Mixing time [min] | 8 | 12 | 14 |
| Mixing temperature [°C] | 29 | 29 | 29 |

After the preparation of dough denoted Dough#7, Dough#8 and Dough#9, 50g of each dough were placed in suitable bowls and the samples were allowed to rise for 50 minutes at a temperature of 25°C as detailed in the method described above and the rising degree (denoted as RD) as a function of time was measured.

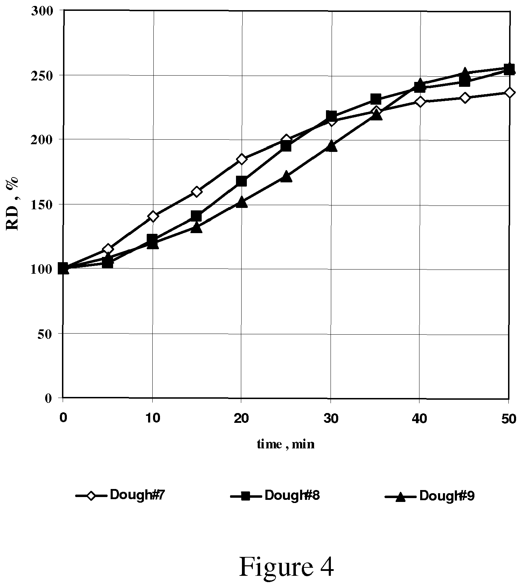

The incorporation of fermenting agent (i.e., yeast) into the dough samples ferment the whole fresh *Wolffia,* and therefore affected the dough rising level as displayed in **Figure 4.** As can be seen in **Figure 4,** while at the beginning there is an increased rise of Dough #7 (without the plant), at some point in time (about 25 minutes) the behavior changes and the dough with the plant exhibited an increased rise.

Without being bound by theory, it was suggested that development of porous structure in dough comprising plant component as whole fresh *Wolffia* with relative low water content (57.6%), is slower in the first part of the process compared to the dough that does not contain the plant. Thus, the rise in the first part of the process is higher in the dough without the plant.

After about 50% of the total rising time (about 25 minutes) the volume of dough with the fresh duckweed begins to be higher compared to the dough without the plant. At the end of rising time, Dough#8 and Dough#9 had rising degree that was about 8% higher than Dough #7 without the plant.

The difference observed between Dough#8 and Dough#9 may be due to different degree of homogenization, possibly influenced by the time of mixing.

## Example 5

In this example, the effect of partial replacement of flour with *Wolffia Arrhiza* as whole fresh plant , was compared to the effect of *Wolffia Arrhiza* as powder dry plant, in dough formulations with high water content, on the fermentation of dough containing yeast was tested. Whole fresh *Wolffia* and flour as described Example 1 were used. Powder dry plant was obtained by drying whole fresh plant at 38°C using a suitable drier for vegetables *Ezidri* for about 22 hours. The granular dried mass was milled with *IKA MF10* grinder and sieved with *Vibratory Sieve shaker* (FISCHER) at the maximum size of 40 microns.

The ingredients and conditions used for preparation the dough are presented in **Table 6.** The rising of the different dough was monitored as detailed in Example 4.

**Table 6: Formulation and processing conditions**

| Components | Dough#10 | Dough#11 | Dough#12 |
|---|---|---|---|
| Flour mass [g] | 500 | 500 | 483 |
| Water mass [g] | 350 | 0 | 349 |
| ***Wolffia* Plant mass [g]** | 0 | 368.4 | - |
| Plant Solid [g] | - | 18.4 | - |
| Plant Water [g] | - | 350 | - |
| **Powder Dry *Wolffia* Plant** | - | | 19.41 |
| solid [g] | - | | 18.4 |
| Water [g] | - | | 1 |
| Yeast (dry) [g] | 8 | 8 | 8 |

(continued)

| Components | Dough#10 | Dough#11 | Dough#12 |
|---|---|---|---|
| Salt [g] | 7.5 | 7.5 | 7.5 |
| **Processing** | | | |
| Equipment | Kitchen Aid-KSM 900, USA | | |
| Mixing speed [rpm] | 60 | 60 | 60 |
| Mixing time [min] | 12 | 12 | 12 |
| Mixing temperature [°C] | 29 | 29 | 29 |

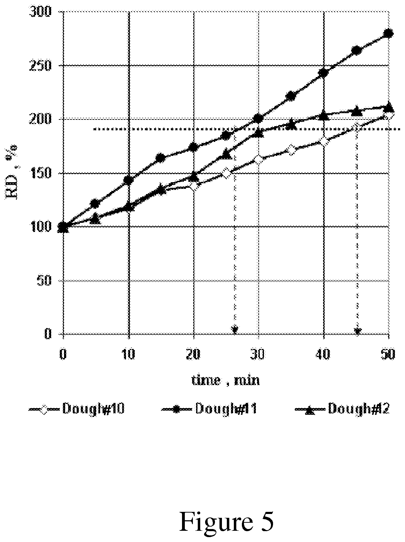

Addition of a fermentation agent to the dough comprising whole fresh plant or powder dry *Wolffia* plant, provided that the dough formulation include 350g water, influenced dough rising as shown in **Figure 5.** As can be seen, the higher rise was observed throughout the testing period in the dough samples comprising *Wolffia arrhiza* (either whole fresh plant or powder dry *Wolffia* plant), with the dough comprising whole fresh plant having a higher height compared with the dough comprising powder dry plant.

It was suggested that in the two dough samples comprising *Wolffia arrhiza* (either whole fresh plant or powder dry *Wolffia* plant), a porous structure was developed fast compared to the sample of dough without the plant.

In the case of the dough with the powder dry *Wolffia* plant (Dough #12), the water used was considered to interact more quickly with flour than with the powder dry plant for rehydration. Mixing causes smaller amounts of active components released from *Wolffia,* and consequently rising process is slower.

The dough formulations having water content of 70% relative to flour (and composite) shown in this example, may be more favorable due to growth of fermentation plasticity of gel phase, and ensure better interaction between yeast and extracts from the plant components.

## Example 6

The sensitivity to abrasion of aquatic plant *Wolffia Arrhiza,* was tested in the following example that included mixing an aqueous suspension of whole fresh plant in a ratio plant: water with values ranging from 1: 1 to 1: 5 under mixing conditions in a beaker of 600mL at velocities ranging from 100 rpm to 500 rpm for 10 minutes.

The resulted suspension has been centrifuged at 1500g for 5 minutes. Supernatant was collected and analyzed to determine concentration of solid content in the whole plant, mass loss *versus* the solid from fresh *Wolffia,* electroconductivity of supernatant and color of extract (extinction at 620 nm) This procedure led to the conclusion that in a whole plant, the solid content is about 4.74gr.

The results obtained are mentioned in **Tables 7** and **8.**

**Table 7: The influence of velocity of mixing on the morphological integrity of *Wolffia Arrhiza* plant at 1:5 fresh *Wolffia* : external water ratio**

| | Extract concentration | Solid loss/DM | EC of extract | Color of extract (620nm) |
|---|---|---|---|---|
| rpm/10min/22°C | g /100g | % | microS | Extinction |
| 100 | 0.053 | 1.23 | 53 | 0.015 |
| 300 | 0.075 | 3.15 | 245 | 0.061 |
| 500 | 0.142 | 5.99 | 302 | 0.078 |

**Table 8: The influence of suspension concentration of *Wolffia Arrhiza* on the morphological integrity (condition of mixing 100rpm/10 min /22°C)**

| fresh *Wolffia* : water | Extract concentration | Solid loss/DM | EC of extract | Color of extract (620nm) |
|---|---|---|---|---|
| by weight | g /100 g | % | microS | extinction |
| 1 : 1 | 0.008 | 0.12 | 138 | 0.037 |

(continued)

| fresh *Wolffia* : water | Extract concentration | Solid loss/DM | EC of extract | Color of extract (620nm) |
|---|---|---|---|---|
| by weight | g /100 g | % | microS | extinction |
| 1 : 2 | 0.012 | 0.25 | 112 | 0.031 |
| 1 : 3 | 0.021 | 0.63 | 90 | 0.025 |
| 1 : 4 | 0.026 | 0.92 | 65 | 0.019 |
| 1 : 5 | 0.053 | 1.23 | 53 | 0.015 |

The data from **Tables 7** and **8** suggest loss of morphological integrity of the plant while maintaining physico-chemical properties and biochemical properties of substances included in the plant. It was suggested that the aqueous solution of the plant includes natural components (saccharides and oligosaccharides, proteins and emulsionable fat - like compounds as pigment-protein complex and fat-protein complex).

## Claims

**1.** A dough comprising yeast, wheat flour and particulate plant material, the dough being **characterized by** a malleable mass with said particulate plant material being distributed therein, the plant being a *Wolffia arrhiza* having its plant color range, and said mass having a mass color falling within or being near said plant color range, said particulate plant material comprises fresh whole plant material, the liquid component of said dough essentially comprises liquid extracted from said fresh whole plant material during the dough kneading process which is then absorbed by the flour to form the dough, and no more than 20% of the total amount of liquid required for forming said dough, is externally added water, wherein said dough having flour to plant material by dry weight ratio (w/w) of 95:5 to 97:3.

**2.** The dough of claim 1, wherein said particulate plant material is selected from the group consisting of whole plant, essentially intact plant, pieces of plant, juice plant, fresh plant material, processed plant, whole cells and fractionated plant cells, said juice plant comprises a colored water suspension from said fresh plant cells with a solid content of between 1% and 15%.

**3.** The dough of claim 1, wherein said plant material has an average diameter selected from the group consisting of: up to 12 mm, between 0.02 mm and 12 mm, between 0.03 mm and 2 mm, between 0.5 mm and 1 mm, and between 0.6 mm to 1 mm.

**4.** The dough of claim 1, wherein said dough comprises a liquid component and dry material, said dry material comprises flour or a combination of flour and plant material when measured in dry form, or wherein said dough comprises weight % ratio of liquid to total dry material selected from the group consisting of: between 55% to 85%, between 60% to 80%, and between 65% to 75%, said total dry material comprises flour and dry plant material.

**5.** The dough of claim 1, wherein dough mass comprises components of the liquid of the plant selected from the group consisting of: plant proteins, protein complexes, saccharides oligosaccharides, fats, vitamin A, vitamin B1 and vitamin B3.

**6.** A method of preparing a dough comprising yeast, wheat flour and particulate plant material, the method comprising kneading flour with said particulate plant material being *Wolffia arrhiza* under conditions sufficient to obtain a malleable mass with said particulate plant material distributed therein, and having a mass color falling within or being near said plant color range said particulate plant material comprises fresh whole plant material, said method additionally comprises steps of kneading said flour with said fresh whole plant material thereby extracting the liquid component of said fresh whole plant material during said kneading process which is then absorbed by the flour to thereby form the dough, such that no more than 20% of the total amount of liquid required for forming the dough is externally added water, wherein said dough having flour to plant material by dry weight ratio (w/w) of 95:5 to 97:3.

**7.** The method of claim 6, additionally comprising at least one step selected from the group consisting of:

a. combining fresh whole plant material with flour, without addition of external water, and kneading said fresh whole plant material with said flour to cause disruption of the skeletal structure of said plant material so as to release liquid from within the plant cells, thereby hydrating said flour to form a vegetal gel with said released liquid,
b. selecting said conditions from the group consisting of kneading time, kneader torque moment, kneading velocity, dough temperature and tip speed,
c. kneading said flour and plant material for a time interval between said dough arrival time and said dough's departure time as determined by a farinograph profile of said dough,
d. kneading said flour and plant material with at least one additional food ingredient, selected from the group consisting of flavoring agent, vegetable or vegetable part, oil, vitamins and grains, and
e. cooling or freezing said dough.

**Patentansprüche**

1. Teig, umfassend Hefe, Weizenmehl und partikelförmiges Pflanzenmaterial, wobei der Teig durch eine formbare Masse gekennzeichnet ist, worin das partikelförmige Pflanzenmaterial verteilt ist, wobei die Pflanze eine *Wolffia arrhiza* ist, die ihren Pflanzenfarbbereich aufweist, und die Masse eine Massefarbe aufweist, die in diesen Pflanzenfarbbereich fällt oder diesem nahesteht, wobei das partikelförmige Pflanzenmaterial frisches Ganzpflanzenmaterial umfasst, wobei die flüssige Komponente des Teigs im Wesentlichen Flüssigkeit umfasst, die während des Teigknetprozesses aus dem frischen Ganzpflanzenmaterial extrahiert wurde, welche dann von dem Mehl absorbiert wird, um den Teig zu bilden, und wobei nicht mehr als 20% der zur Bildung des Teigs erforderlichen Gesamt-Flüssigkeitsmenge extern zugesetztes Wasser ist, wobei der Teig ein Mehl- zu Pflanzenmaterial-Trockengewichtsverhältnis (Gew./Gew.) von 95:5 bis 97:3 aufweist.

2. Teig nach Anspruch 1, wobei das partikelförmige Pflanzenmaterial aus der Gruppe ausgewählt ist, bestehend aus ganzer Pflanze, im Wesentlichen intakter Pflanze, Stücken von Pflanzen, Pflanzensaft, frischem Pflanzenmaterial, verarbeiteter Pflanze, ganzen Zellen und fraktionierten Pflanzenzellen, wobei der Pflanzensaft eine farbige Wassersuspension aus den frischen Pflanzenzellen mit einem Feststoffgehalt von zwischen 1% und 15% umfasst.

3. Teig nach Anspruch 1, wobei das Pflanzenmaterial einen durchschnittlichen Durchmesser aufweist, ausgewählt aus der Gruppe, bestehend aus: bis zu 12 mm, zwischen 0,02 mm und 12 mm, zwischen 0,03 mm und 2 mm, zwischen 0,5 mm und 1 mm, und zwischen 0,6 mm bis 1 mm.

4. Teig nach Anspruch 1, wobei der Teig eine flüssige Komponente und Trockenmaterial umfasst, wobei das Trockenmaterial Mehl oder eine Kombination von Mehl und Pflanzenmaterial umfasst, in trockener Form gemessen, oder wobei der Teig ein Gewichtsprozent-Verhältnis von Flüssigkeit zu gesamtem Trockenmaterial umfasst, ausgewählt aus der Gruppe, bestehend aus: zwischen 55% und 85%, zwischen 60% und 80%, und zwischen 65% und 75%, wobei das gesamte Trockenmaterial Mehl und trockenes Pflanzenmaterial umfasst.

5. Teig nach Anspruch 1, wobei die Teigmasse Komponenten der Flüssigkeit der Pflanze umfasst, ausgewählt aus der Gruppe, bestehend aus: Pflanzenproteinen, Proteinkomplexen, Sacchariden, Oligosacchariden, Fetten, Vitamin A, Vitamin B1 und Vitamin B3.

6. Verfahren zur Herstellung eines Teigs, umfassend Hefe, Weizenmehl und partikelförmiges Pflanzenmaterial, wobei das Verfahren das Kneten von Mehl mit dem partikelförmigen Pflanzenmaterial, das *Wolffia arrhiza* ist, unter Bedingungen umfasst, die ausreichend sind, um eine formbare Masse, worin das partikelförmige Pflanzenmaterial verteilt ist, zu erhalten, und die eine Massefarbe aufweist, die in diesen Pflanzenfarbbereich fällt oder diesem nahesteht, wobei das partikelförmige Pflanzenmaterial frisches Ganzpflanzenmaterial umfasst, wobei das Verfahren zusätzlich Schritte des Knetens des Mehls mit dem frischen Ganzpflanzenmaterial umfasst, wodurch die flüssige Komponente des frischen Ganzpflanzenmaterials während des Knetprozesses extrahiert wird, welche dann von dem Mehl absorbiert wird, um dadurch den Teig zu bilden, sodass nicht mehr als 20% der zur Bildung des Teigs erforderlichen Gesamt-Flüssigkeitsmenge extern zugesetztes Wasser ist, wobei der Teig ein Mehl- zu Pflanzenmaterial-Trockengewichtsverhältnis (Gew./Gew.) von 95:5 bis 97:3 aufweist.

7. Verfahren nach Anspruch 6, zusätzlich mindestens einen Schritt umfassend, ausgewählt aus der Gruppe, bestehend aus:

a. Kombinieren von frischen Ganzpflanzenmaterial mit Mehl, ohne Zusatz von externem Wasser, und Kneten des frischen Ganzpflanzenmaterials mit dem Mehl, um ein Aufbrechen der Skelettstruktur des Pflanzenmaterials zu verursachen, um Flüssigkeit aus den Pflanzenzellen freizusetzen und dadurch das Mehl zu hydrieren, um ein pflanzliches Gel mit der freigesetzten Flüssigkeit zu bilden,

b. Auswählen der Bedingungen aus der Gruppe, bestehend aus Knetzeit, Kneter-Drehmoment, Knetgeschwindigkeit, Teigtemperatur und Spitzengeschwindigkeit,

c. Kneten des Mehls und des Pflanzenmaterials für einen Zeitraum zwischen der Teigankunftszeit und der Ausgabezeit des Teigs, ermittelt durch ein Farinographprofil des Teigs,

d. Kneten des Mehls und des Pflanzenmaterials mit mindestens einem zusätzlichen Lebensmittelingredienten, ausgewählt aus der Gruppe, bestehend aus Aromastoff, Pflanze oder Pflanzenteil, Öl, Vitaminen und Körnern, und

e. Kühlen oder Einfrieren des Teigs.

**Revendications**

1. Pâte comprenant de la levure, de la farine de froment et une matière végétale particulaire, la pâte étant **caractérisée par** une matière malléable dans laquelle est distribuée ladite matière végétale particulaire, la plante représentant une *Wolffia arrhiza* possédant sa gamme de couleurs de plante, et ladite matière possédant une couleur de matière qui rentre dans ladite gamme de couleurs de plante ou qui est proche de ladite gamme ; ladite matière végétale particulaire comprend une matière de plante entière fraîche, le composant de ladite pâte comprend essentiellement un liquide extrait de ladite matière de plante entière fraîche au cours du processus de malaxage de la pâte, qui est ensuite absorbé par la farine pour former la pâte, et pas plus de 20 % de la quantité totale de liquide requise pour la formation de ladite pâte ne représentent de l'eau ajoutée depuis extérieur ; dans laquelle ladite pâte possède un rapport de matières sèches (en poids/poids) entre la farine et la matière végétale de 95:5 à 97:3.

2. Pâte selon la revendication 1, dans laquelle ladite matière végétale particulaire est choisie parmi le groupe constitué par une plante entière, une plante essentiellement intacte, des morceaux de plantes, des plantes à jus, une matière végétale fraîche, des plantes traitées, des cellules entières et des cellules végétales fractionnées, ladite plante à jus comprenant une suspension aqueuse colorée provenant desdites cellules végétales fraîches avec une teneur en produits solides qui se situe entre 1 % et 15 %.

3. Pâte selon la revendication 1, dans laquelle ladite matière végétale possède un diamètre moyen choisi parmi le groupe constitué par : un diamètre allant jusqu'à 12 mm, se situant entre 0,02 mm et 12 mm, entre 0,03 mm et 2 mm, entre 0,5 mm et 1 mm et entre 0,6 mm et 1 mm.

4. Pâte selon la revendication 1, dans laquelle ladite pâte comprend un composant liquide et une matière sèche, ladite matière sèche comprenant de la farine ou une combinaison de farine et d'une matière végétale lorsqu'on la mesure sous une forme sèche, ou dans laquelle ladite pâte comprend un rapport en pour cent en poids du liquide à la matière sèche totale choisi parmi le groupe constitué par : entre 55 % et 85 %, entre 60 % et 80 % et entre 65 % et 75 %, ladite matière sèche totale comprenant de la farine et une matière végétale sèche.

5. Pâte selon la revendication 1, dans laquelle la matière de la pâte comprend des composants du liquide de la plante choisis parmi le groupe constitué par : des protéines végétales, des complexes protéiniques, des saccharides, des oligosaccharides, des graisses, de la vitamine A, de la vitamine B1 et de la vitamine B3.

6. Procédé de préparation d'une pâte comprenant de la levure, de la farine de froment et une matière végétale particulaire, le procédé comprenant le fait de malaxer de la farine avec ladite matière végétale particulaire, à savoir *Wolffia arrhiza,* dans des conditions suffisantes pour obtenir une matière malléable dans laquelle est distribuée ladite matière végétale particulaire, et possédant une couleur de matière qui rentre dans ladite gamme de couleurs de plante ou qui est proche de ladite gamme ; ladite matière végétale particulaire comprend une matière de plante entière fraîche ; ledit procédé comprend en outre des étapes de malaxage de ladite farine avec ladite matière de plante entière fraîche pour ainsi extraire le composant liquide de ladite matière de plante entière fraîche au cours dudit processus de malaxage, qui est ensuite absorbé par la farine, ce qui permet d'obtenir la pâte, d'une manière telle que pas plus de 20 % de la quantité totale de liquide requise pour la formation de ladite pâte représentent de l'eau ajoutée depuis l'extérieur ; dans laquelle ladite pâte possède un rapport de matières sèches (en poids/poids) entre la farine et la matière végétale de 95:5 à 97:3.

7. Procédé selon la revendication 6, comprenant en outre au moins une étape choisie parmi le groupe constitué par :

a. une combinaison d'une matière de plante entière fraîche avec de la farine, sans addition d'eau externe, et un malaxage de ladite matière de plante entière fraîche avec ladite farine pour obtenir une destruction de la structure squelettique de ladite matière végétale afin de libérer du liquide à partir de l'intérieur des cellules végétales, pour ainsi hydrater ladite farine afin d'obtenir un gel végétal avec ledit liquide libéré ;
b. une sélection desdites conditions parmi le groupe constitué par : la durée du malaxage, le couple du malaxeur, la vitesse de malaxage, la température de la pâte et la vitesse de pointe ;
c. le malaxage de ladite farine et de ladite matière végétale pendant un laps de temps s'étendant entre ledit moment correspondant à l'arrivée de la pâte et ledit moment correspondant au départ de la pâte, comme déterminés par le profil farinographique de ladite pâte ;
d. le malaxage de ladite farine et de la dite matière végétale avec au moins un ingrédient alimentaire supplémentaire choisi parmi le groupe constitué par un agent donnant du goût, un légume ou une partie d'un légume, de l'huile, des vitamines et des graines ; et
e. le refroidissement ou la congélation de ladite pâte.

Stability
600
FU
500
400
300
200
100
0
Consistency
Degree of Softening
Development Time
12 min
5
10
15
min

Figure 1 (prior art)

FU
FARINOGRAM
FU
700
600
500
400
0
4
8
12
16
20
Minutes

Figure 2A

Figure 2B

FU
700
600
500
400
FU
700
600
500
400
0
4
8
12
16
20
Minutes

Figure 2C

Figure 2D

FU
FARINOGRAM
FU
700
600
500
400
0
4
8
12
16
20
Minutes

Figure 3A

700
600
500
400
0
4
8
12
16
20
Minutes

Figure 3B

700
600
500
400
700
600
500
400
0
4
8
12
16
20
Minutes

Figure 3C

300
250
200
150
100
50
0
RD , %
0
10
20
30
40
50
time , min
Dough#7
Dough#8
Dough#9

Figure 4

300
250
200
150
100
50
0
RD , %
0
10
20
30
40
50
time , min
Dough#10
Dough#11
Dough#12

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2004052916 A
- US 2006141100 A
- WO 06111779 A
- US 2007184160 A
- US 2010247731 A
- WO 2004023880 A
- WO 2005076741 A
- WO 2009037086 A


### Non-patent literature cited in the description


- **VOICU GH. ; CONSTANTIN GH. ; STEFAN E.M. ; GEORGE IPATE G.** Variation of farinographic parameters of doughs obtained from wheat and rye flour mixtures during kneading. *U.P.B. Sci. Bull., Series D,* 2012, vol. 74 (2
- **DR. D. WARTINBEE.** Redoubt Reporter. *Science of the Seasons: Where there's a weed, nature makes way,* 2010, http://redoubtreporter.wordpress.com/2010/11/24/science-of-the-seasons-where-there%E2%80%99s-a-weed-nature-makes-way
- **VOICU GH. et al.** *U.P.B. Sci. Bull., Series D,* 2012, vol. 74 (2